# EUROPÄISCHE PATENTANMELDUNG

(11) **EP 1 345 396 A1**
(43) Veröffentlichungstag der Anmeldung: **17.09.2003**
(21) Anmeldenummer: 01119525.2
(22) Anmeldetag: 14.08.2001
(51) Int. Cl.: H04M 3/42, H04L 12/58

(54) **Bereitstellen von Chiffren für Inserate**

(71) Anmelder: SIEMENS AKTIENGESELLSCHAFT, 80333 München (DE)
(72) Erfinder: Blanck, Jens, 82166 Gräfelfing (DE)

(57) **Zusammenfassung**

Der Inserent eines Inserates in einer regelmäßig oder unregelmäßig erscheinenden Druckschrift, an einer Mitteilungstafel oder in einem regelmäßig oder unregelmäßig aktualisierten Intranet/Internetangebot steht häufig vor dem Problem, im Inserat entweder seine Telefonnummer anzugeben und damit einerseits seine Anonymität aufzugeben und sich andererseits den Anrufen von Interessenten ausgesetzt zu sehen, auch wenn das Inserat bereits gegenstandslos geworden ist, oder eine für Interessenten weniger attraktive klassische Chiffre-Anzeige zu verwenden. Das erfindungsgemäße Verfahren vermeidet die Nachteile, indem durch einen Dienstleister eine Rufnummer bereitgestellt wird, von der aus während der Gültigkeit des Inserats eingehende Anrufe an eine Rufnummer des Inserenten weitergeleitet werden. Dies kann erfindungsgemäß mit dem Dienst Unified Messaging kombiniert werden.

## Beschreibung

In einer großen Zahl regelmäßig oder unregelmäßig erscheinender Druckschriften, z.B. in Tages/Wochenzeitungen, Fachzeitschriften, Anzeigenblättern; an Mitteilungstafeln - sogenannten Schwarzen Brettern - im öffentlichen Raum oder innerhalb der Räume etwa eines Betriebes sowie in regelmäßig oder unregelmäßig aktualisierten Intranet/Internetangeboten, z.B. Internetausgaben der erwähnten Druckschriften, virtuelle schwarze Bretter; werden Inserate - meist privater - Anbieter bzw. Interessenten veröffentlicht, z.B. betreffend Verkauf/Kauf, Miete/Vermietung, Mitfahrgelegenheiten, Gelegenheitsarbeiten; die sich dadurch auszeichnen, daß es sich in der Regel einmalig nur um eine geringe Menge der angebotenen bzw. nachgefragten Sache, z.B. Vermietung **einer** Wohnung, Verkauf **eines** Fahrzeugs; oder um eine einmalige und/oder zeitlich stark beschränkte Dienstleistung handelt, z.B. Mitfahrgelegenheit an einem bestimmten Tag zu einem bestimmten Ziel; handelt.

Zur Kontaktaufnahme gibt der Inserent dabei regelmäßig eine Telefonnummer an, was für ihn jedoch mit mehreren Nachteilen verbunden ist. Einerseits bekommt der Inserent auch noch nachdem sein Inserat bereits gegenstandslos geworden ist diesbezügliche Anrufe. Andererseits gibt der Inserent durch Angabe seiner Telefonnummer seine Anonymität gegenüber jedem Leser des Inserates auf, da Werkzeuge zur Ermittlung des Inhabers einer Telefonnummer aus der Telefonnummer existieren.

Um diese Nachteile zu vermeiden, werden chiffrierte Inserate verwendet. Antworten auf chiffrierte Inserate sind nur schriftlich möglich. Alle Antworten auf ein Inserat werden unter Angabe der Chiffre an eine zentrale Adresse gesandt, meist die Redaktion des das Inserat veröffentlichenden Mediums, wo die Antworten durch den Inserenten eingesehen werden oder gesammelt von der Redaktion an den Inserenten weitergeleitet werden.

Dieses Verfahren sichert zwar die Anonymität des Inserenten, verkompliziert jedoch die Kontaktaufnahme, da nur schriftliche Antworten möglich sind. Von Nachteil ist beispielsweise, daß es dem Interessenten nicht möglich ist, Fragen an den Inserenten, von deren Beantwortung die Abgabe eines Angebotes abhängig ist, direkt beantwortet zu bekommen. Weiterhin muß der Interessent gegenüber dem Inserenten seine Anonymität preisgeben, so daß chiffrierte Inserate grundsätzlich weniger attraktiv für den Interessenten sind als nicht chiffrierte Inserate. Zudem kommt es aufgrund des schriftlichen Verfahrens mit zentraler Sammlung der Antworten auf das Inserat einerseits aufgrund der Postlaufzeiten und andererseits aufgrund der durch die Sammlung der bis zu einem bestimmten Termin eintreffenden Antworten zu unerwünschten zeitlichen Verzögerungen.

Die der vorliegenden Erfindung zugrundeliegende Aufgabe besteht darin, ein Verfahren zum Bereitstellen von Chiffren für Inserate anzugeben, welches die Nachteile eines herkömmlichen chiffrierten Inserats vermeidet.

Diese Aufgabe wird ausgehend vom Oberbegriff des Patentanspruchs 1 durch dessen kennzeichnende Merkmale gelöst.

Ein wesentlicher Vorteil des erfindungsgemäßen Verfahrens besteht darin, daß der Inserent anstatt seiner eigenen Telefonnummer in Inseraten eine ihm temporär zugewiesene Telefonnummer eines Dienstleisters verwenden kann, somit seine Anonymität nicht gefährdet und trotzdem den Vorzug direkter telefonischer Erreichbarkeit nutzen kann. Ankommende Anrufe werden automatisch vom Dienstleister an eine vom Inserenten vorgegebene Rufnummer oder, falls das Inserat nicht mehr gültig ist oder der Inserent nicht gestört werden möchte, zu einer Ansage weitergeleitet. Gleichzeitig ist für den Interessenten die Kontaktaufnahme zum Inserenten genauso bequem zu bewerkstelligen als wäre die Telefonnummer des Inserenten veröffentlicht, d.h. aus Sicht des Interessenten ist der Vorgang der Weiterleitung seines Anrufs vom Dienstleister zum Anschluß des Inserenten transparent. Im Gegensatz zum klassischen Chiffre-Verfahren muß der Interessent gegenüber dem Inserenten seine Anonymität vorerst nicht aufgeben, wodurch ein Inserat mit erfindungsgemäßer Chiffre attraktiver ist.

In einer Weiterbildung des erfindungsgemäßen Verfahrens kann der Inserent ein Zeitschema für die Weiterleitung der ihn betreffenden Anrufe zu mehreren Rufnummern vorgeben. Auf einfache Art und Weise kann der Inserent beispielsweise festlegen, wann die Anrufe zu einer Ansage umgeleitet werden sollen, weil der Inserent nicht gestört werden möchte, etwa nachts, oder wann die Anrufe zu seinem Mobiltelefon umgeleitet werden sollen.

Vorteilhaft läßt sich die Zuordnung der vom Dienstleister vergebenen Rufnummer zur Weiterleitungsnummer jederzeit ändern. Dies ermöglicht insbesondere das Ändern einer Rufnummer, unter welcher der Inserent zu einem bestimmten Zeitpunkt erreichbar ist. Außerdem ist es möglich, die Weiterleitung auf eine Ansage des Dienstleisters umzuleiten, wenn das Inserat seine Gültigkeit verloren hat, etwa weil die angebotene Wohnung vermietet wurde.

In einer vorteilhaften Ausgestaltung des erfindungsgemäßen Verfahrens wird der Dienst Unified Messaging verwendet, um die Weiterleitung der Nachrichten eines Interessenten an den Inserenten zu ermöglichen. Unter Unified Messaging ist die Verschmelzung von Faxdiensten, Sprachdiensten, eMail-Diensten und SMS - Short Message Service, Kurznachrichtendienst - zu verstehen, wobei dem Empfänger die Nachrichten aller dieser Dienste in einheitlicher Form präsentiert werden. Beispielsweise kann der Empfänger sich eingehende Textnachrichten - eMails, Faxe, SMS-Nachrichten - an einem Telefon vorlesen lassen, oder er bekommt Sprachnachrichten, Faxe und SMS-Nachrichten als eMails zugestellt.

Ein zweites Verfahren sieht vorteilhaft die Verwendung von Datennetzadressen, beispielsweise eMail-Adressen, vor. In einer vorteilhaften Ausprägung werden Einmal-eMail-Adressen verwendet, wodurch ausgeschlossen ist, daß ein zweiter Inserent Antworten auf Inserate eines ersten Inserenten, dem vor dem zweiten Inserenten eine bestimmte eMail-Adresse zugeteilt war, erhält.

Weitere vorteilhafte Ausgestaltungen der Erfindung sind den Unteransprüchen zu entnehmen.

Im folgenden wird das erfindungsgemäße Verfahren anhand eines Ausführungsbeispiels näher erläutert.

Der Inserent beauftragt einen Dienstleister mit der Bereitstellung einer temporären Rufnummer zur Verwendung mit einem Inserat in einer Druckschrift, an einer Mitteilungstafel oder in Intranet/Internetangeboten und gibt eine oder mehrere Rufnummern und gegebenenfalls ein Zeitschema an, wann er unter welcher Rufnummer das Inserat betreffende Anrufe empfangen möchte bzw. wann er keine Anrufe empfangen und eingehende Anrufe an eine Ansage weiterleiten möchte.

Der Dienstleister kann dabei von der Redaktion der Druckschrift oder des Intranet/Internetangebotes beauftragt oder mit der Redaktion der Druckschrift oder des Intranet/Internetangebotes identisch sein. Es kann sich jedoch auch um einen auf Rufnummervermietungen spezialisierten Dienstleister handeln.

Der Inserent erhält eine Rufnummer durch den Dienstleister zugeteilt. Anrufe unter dieser Rufnummer werden entsprechend des vom Inserenten gewünschten Zeitschemas an die durch ihn vorgegebenen Rufnummern bzw. an eine Ansage weitergeleitet.

Ist der Inserent unter einer der angegebenen Rufnummern nicht erreichbar, wird gemäß einer festgelegten Reihenfolge der Anruf an die weiteren angegebenen Rufnummern weitergeleitet.

Falls sich Änderungen an diesem Zeitschema ergeben, oder falls der Dienstleister nur eine Rufnummer des Inserenten vorsieht, auf welche eingehende Anrufe weitergeleitet werden, kann der Inserent über eine vom Dienstleister bereitgestellte Internetseite das Zeitschema und die zugeordneten Rufnummern ändern. In einer Ausprägung des erfindungsgemäßen Verfahrens kann die Zuordnung ebenfalls über ein Call Center, dort mittels Sprachcomputer oder mit Hilfe eines Call Center Mitarbeiters, geändert werden.

Eingehende Anrufe von Interessenten werden entsprechend des vom Inserenten vorgegebenen Zeitschemas an eine der Rufnummern des Inserenten oder, falls der Inserent beispielsweise nachts nicht gestört werden möchte, an eine Ansage weitergeleitet.

Nachdem das Inserat gegenstandslos geworden ist, etwa durch Verkauf der inserierten Sache, teilt der Inserent dies dem Dienstleister mittels Internet oder Call Center mit. Der Dienstleister schaltet daraufhin unter der zuvor dem Inserenten zugeteilten Rufnummer eine Ansage, die etwaige Anrufer darüber in Kenntnis setzt, daß das betreffende Inserat nicht länger gültig ist. Nach einer angemessenen Zeit verwendet der Dienstleister die Rufnummer erneut, wobei der Dienstleister diese Zeit anhand der Art der Inserate und der ihm durch die Nichtnutzung der Rufnummer entstehenden Kosten festlegt.

Das erfindungsgemäße Verfahren ist nicht auf das angegebene Ausführungsbeispiel beschränkt. Eine weitere vorteilhafte Ausgestaltung sieht die Verwendung von eMail-Adressen bzw. eMail-Weiterleitungs-Adressen anstelle der Telefonnummern vor. Gegenüber Telefonnummern, deren Vorrat begrenzt ist, besteht bei eMail-Adressen beispielsweise der Vorteil, daß ökonomisch sinnvoll Einmal-eMail-Adressen eingesetzt werden können, bei einem Fahrzeugverkauf etwa lautet eine solche Einmal-eMail-Adresse wie folgt:
Hersteller.Typ.Inseratnummer@Fahrzeug.Dienstleister.land
und für ein Mietobjekt:
Stadt.Stadtteil.Inseratnummer@Mietwohnung.Dienstleister.land
wobei der unterstrichene Teil dieser Adressen einmalig ist. In einer weiteren Ausprägung werden anstelle der Einmal-eMail-Adressen Pseudo-Einmal-eMail-Adressen eingesetzt. Diese sind beispielsweise genauso aufgebaut, werden jedoch nach einem längeren Zeitraum, beispielsweise einem Jahr, erneut verwendet.

Der Dienst Unified Messaging kann ebenfalls vorteilhaft durch den Dienstleister eingesetzt werden, um eingehende Antworten verschiedenen Formats - Sprachnachrichten, Faxnachrichten, eMail-Nachrichten, Short Message Service Nachrichten - in einheitlichem Format, z.B. nur als Sprachnachricht oder nur als eMail-Nachricht, an den Inserenten weiterzuleiten. Diese Weiterbildung ist in gleicher Weise komfortabel durch den Inserenten konfigurierbar wie das oben beschriebene Ausführungsbeispiel.

## Patentansprüche

1. Verfahren zum Bereitstellen von Chiffren für Inserate,
**dadurch gekennzeichnet,**
- **daß** als Chiffren spezielle Rufnummern verwendet werden,
- **daß** die speziellen Rufnummern für die Dauer der Gültigkeit des Inserates dem Inserat zugeordnet sind,
- **daß** Anrufe an die speziellen Rufnummern auf andere Rufnummern und/oder auf Ansagedienste umgeleitet werden.

2. Verfahren nach Anspruch 1,
**dadurch gekennzeichnet,**
**daß** speziellen Rufnummern mittels einer vorgegebenen, von der Tageszeit und dem Datum abhängigen Tabelle auf mehrere andere Rufnummern und/oder Ansagen umgeleitet werden.

3. Verfahren nach einem der Ansprüche 1 oder 2,
**dadurch gekennzeichnet,**
**daß** die Umleitung der speziellen Rufnummern auf andere Rufnummern und/oder Ansagen durch einen Dienst im Internet gesteuert wird.

4. Verfahren nach einem der Ansprüche 1 oder 2,
**dadurch gekennzeichnet,**
**daß** die Umleitung der speziellen Rufnummern auf andere Rufnummern und/oder Ansagen durch einen Sprachcomputerdienst im Telefonnetz gesteuert wird.

5. Verfahren nach einem der Ansprüche 1 oder 2,
**dadurch gekennzeichnet,**
**daß** die Umleitung der speziellen Rufnummern auf andere Rufnummern und/oder Ansagen durch einen Operatordienst im Telefonnetz gesteuert wird.

6. Verfahren nach einem der Ansprüche 1 oder 2,
**dadurch gekennzeichnet,**
**daß** zusätzlich zu den speziellen Rufnummern spezielle eMail-Adressen und/oder spezielle Faxnummern vorgesehen werden und die Umleitung der speziellen Rufnummern und/oder der speziellen eMail-Adressen und/oder der speziellen Faxnummern mittels Unified Messaging zu eMail-Systemen und/oder Short Message Service Systemen und/oder Sprachdiensten erfolgt.

7. Verfahren zum Bereitstellen von Chiffren für Inserate,
**dadurch gekennzeichnet,**
- **daß** als Chiffren spezielle Datennetzadressen verwendet werden,
- **daß** die speziellen Datennetzadressen für die Dauer der Gültigkeit des Inserates dem Inserat zugeordnet sind,
- **daß** Nachrichten an die speziellen Datennetzadressen auf andere Datennetzadressen und/oder auf automatische Antwortdienste umgeleitet werden.

8. Verfahren nach Anspruch 7,
**dadurch gekennzeichnet,**
**daß** speziellen Datennetzadressen mittels einer vorgegebenen, von der Tageszeit und dem Datum abhängigen Tabelle auf mehrere andere Datennetzadressen und/oder automatische Antwortdienste umgeleitet werden.

9. Verfahren nach einem der Ansprüche 7 oder 8,
**dadurch gekennzeichnet,**
**daß** die Umleitung der speziellen Datennetzadressen auf andere Datennetzadressen und/oder automatische Antwortdienste durch einen Dienst im Internet gesteuert wird.

10. Verfahren nach einem der Ansprüche 7 oder 8,
**dadurch gekennzeichnet,**
**daß** die Umleitung der speziellen Datennetzadressen auf andere Datennetzadressen und/oder automatische Antwortdienste durch einen Sprachcomputerdienst im Telefonnetz gesteuert wird.

11. Verfahren nach einem der Ansprüche 7 oder 8,
**dadurch gekennzeichnet,**
**daß** die Umleitung der speziellen Datennetzadressen auf andere Datennetzadressen und/oder automatische Antwortdienste durch einen Operatordienst im Telefonnetz gesteuert wird.

12. Verfahren nach einem der Ansprüche 7 bis 11,
**dadurch gekennzeichnet,**
**daß** die speziellen Datennetzadressen zur einmaligen Verwendung als Chiffre vorgesehen sind.

13. Verfahren nach einem der Ansprüche 7 bis 12,
**dadurch gekennzeichnet,**
**daß** für die speziellen Datennetzadressen eMail-Adressen vorgesehen sind.
